# DEMANDE DE BREVET EUROPEEN

(11) **EP 1 503 563 A1**
(43) Date de publication de la demande: **02.02.2005**
(21) Numéro de dépôt: 04291891.2
(22) Date de dépôt: 23.07.2004
(51) Int. Cl.: H04L 29/06

(54) **Procédé de sécurisation de requetes d'accès à des services, terminal et module logiciel pour mettre en oeuvre le procédé**

(30) Priorité: 29.07.2003 FR 0309308
(71) Demandeur: FRANCE TELECOM, 75015 Paris (FR)
(72) Inventeur: De Boursetty, Benoît, 75015 Paris (FR); Frisch, Laurent, 75013 Paris (FR); Veysset, Franck, 92130 Issy les Molineaux (FR)
(74) Mandataire: Loisel, Bertrand

(57) **Abrégé**

Un procédé de sécurisation de requêtes d'accès à des services depuis un terminal (1) apte à communiquer avec une pluralité d'opérateurs de services (A;B) délivrant des services respectifs, comprenant les étapes suivantes :
- munir le terminal d'au moins un composant logiciel (6;7) fourni par un opérateur délivrant au moins un service avec une condition d'accès particulière;
- lors d'une requête d'accès audit service depuis le terminal par l'intermédiaire d'un réseau de communications, exécuter le composant logiciel fourni par l'opérateur localement dans le terminal, l'exécution du composant logiciel comprenant au moins la présentation à un utilisateur du terminal d'une indication définie par l'opérateur dans le composant relativement à la condition d'accès particulière du service.

## Description

La présente invention concerne le domaine de l'accès à distance à des services par l'intermédiaire d'un réseau de communication.

Certains services peuvent présenter des conditions d'accès particulières : celles-ci sont par exemple un service payant avec un tarif donné, la présence de tiers appelés à recevoir des informations nominatives sur l'utilisateur du service, etc. Certains services peuvent également comprendre des opérations ayant pour effet d'effacer des données appartenant à l'utilisateur. La condition d'accès à un service peut également combiner plusieurs de ces aspects.

La commande de tels services, ou plus généralement l'accès à ces services, doit faire l'objet d'opérations visant à confirmer qu'elle est effectivement souhaitée par l'utilisateur, en connaissance de cause. Les opérations peuvent prendre la forme d'une information, parfois obligatoire légalement (par exemple dans le cas d'informations privées fournies à des tiers) ou encore d'une demande d'accord à l'utilisateur. Par exemple, lorsque le service est payant, il est nécessaire que l'utilisateur soit d'accord pour consommer ce service. Sinon, il peut être surpris par la facture de l'opérateur et la contester.

Or, l'apparition de terminaux utilisateurs ouverts au téléchargement d'applications informatiques locales introduit des problèmes dans ce domaine, augmentant les risques de contestation de la facture des services consommés par l'utilisateur.

En effet, lorsque les systèmes d'information d'un opérateur de services reçoivent de la part d'un de leurs clients l'ordre d'accéder à un service (par exemple, l'ordre de passer un appel téléphonique, l'ordre d'envoyer un message numérique ou l'ordre d'exécuter un paiement), le sous-système de facturation de l'opérateur comptabilise cet événement pour le client en question, ce qui donne éventuellement lieu à facturation.

Cependant, l'opérateur de services est tributaire du terminal utilisé pour communiquer avec son client. Par exemple, dans le cas de services de téléphonie, si un terminal doté d'applications informatiques sournoises passe commande d'appels téléphoniques à l'insu de l'utilisateur, ce dernier contestera a priori la facture présentée par son opérateur téléphonique. En cas de litige sur la facture, la détermination de responsabilité de l'utilisateur ou de l'opérateur n'est pas aisée et est potentiellement coûteuse à établir. De plus, même si la responsabilité finale était rejetée sur l'utilisateur, assignant celui-ci au paiement de sa facture telle quelle, la confiance des utilisateurs envers leur opérateur serait grandement endommagée. Cela constitue pour l'opérateur de services un risque de perte de valeur de sa relation client.

On notera que le problème posé par les applications sournoises ne doit pas être confondu avec problème dit d'authentification, qui apparaît en particulier dans le cadre des réseaux sans fil comme le GSM ou l'UMTS. Le problème de l'authentification consiste à s'assurer qu'un attaquant ne peut usurper l'identité d'un client. Il est résolu dans le cas des réseaux GSM à l'aide d'une authentification symétrique (sans prévenir les attaques par interposition) et plus complètement dans les réseaux UMTS. La sécurité est renforcée par l'utilisation d'une carte à puce rendant plus difficile la duplication des clefs secrètes employées par l'utilisateur pour l'authentification. Cependant, même lorsque l'authentification est réalisée de façon sécurisée, le problème des applications sournoises existe. Il est en outre toujours existant dans le cadre de services offerts sur un terminal informatique via un réseau de télécommunications fixe, dans lequel le problème de l'authentification se pose dans une moindre mesure.

Il existe certaines techniques permettant de sécuriser les commandes à distance de services présentant des conditions d'accès particulières l'opérateur faisant connaître à ses clients le prix des services consommés sur le terminal utilisé pour y accéder. Par exemple, dans le cas de la téléphonie mobile GSM, un service optionnel du réseau (le service Advice of Charge [3GPP 24.086, v. 5.0.0]) permet à l'utilisateur d'être informé du prix des communications qu'il passe.

Dans le cas du Minitel, une pression sur la touche "Sommaire" lors de l'établissement de la connexion signifie au serveur une demande d'affichage du prix, qui est transmis en permanence lors de la consultation du service.

Ces systèmes présentent cependant l'inconvénient d'exiger l'établissement d'un canal de communication pour l'affichage du prix, canal qui représente un coût pour l'opérateur.

Par ailleurs, certains opérateurs de services choisissent de résoudre le problème des applications sournoises en sélectionnant avec grand soin les terminaux qui peuvent être utilisés pour effectuer des transactions, et en rendant difficile l'installation d'applications informatiques supplémentaires. Ainsi, par exemple, les guichets automatiques bancaires ou les terminaux de paiement électronique sont soumis à un contrôle rigoureux de la part des banques ou réseaux bancaires qui les utilisent pour offrir leurs services à distance : dans les spécifications de ces terminaux, on contrôle l'installation de nouvelles applications informatiques de façon stricte.

Il est ainsi possible de limiter le téléchargement à des applications dont le comportement aura fait l'objet d'un audit préalable. Cela est possible, par exemple, en utilisant des terminaux qui n'exécutent des applications que si elles sont signées numériquement, avec un certificat de clef publique habilité par l'opérateur de services. Cela peut être le cas des terminaux fonctionnant avec système d'exploitation Microsoft Smartphone 2002, avec la fonctionnalité d'exécution d'applications non signées désactivée.

Une autre façon pour l'opérateur de limiter les risques est d'autoriser le téléchargement, toujours au moyen d'un système de signature numérique, lorsque l'éditeur de chaque application accepte de prendre la responsabilité des dommages occasionnés par un dysfonctionnement éventuel de son application. Il n'y a pas de différence technique, sur le terminal, entre ce procédé et celui décrit au paragraphe précédent.

Ces procédés combinent une approche technique (signature numérique) avec des garanties apportées de façon externe au système (garantie de bon comportement de l'application, prise de responsabilité externe).

Cependant, l'approche combinant signature numérique des applications et contrôle externe a pour inconvénient principal le coût des procédures de contrôle externe. Les procédures de certifications d'application, ou de prise de responsabilité en cas de mauvais comportements d'un terminal, sont complexes et coûteuses à mettre en place car elles nécessitent l'établissement d'une relation privilégiée entre l'opérateur de services et l'éditeur d'applications.

Dans le domaine de la téléphonie mobile, des terminaux apparus récemment offrent la possibilité à leurs détenteurs de télécharger des applications informatiques d'origine quelconque. Il s'agit par exemple de terminaux permettant le téléchargement d'applications de technologie Java MIDP 2.0 (Sun Microsystems), ou d'applications pour les systèmes d'exploitation Microsoft Smartphone 2002 (Microsoft), Symbian OS 7.0 (Symbian), PalmOS (PalmSource), etc. Des applications sur de tels terminaux ont, selon les cas, la capacité d'accéder à divers services offerts par l'opérateur de téléphonie mobile sur le terminal, comme par exemple le service de téléphonie traditionnel, des services de télécommunication numérique, des services de messagerie multimédia, etc. Si de telles applications, téléchargées par l'utilisateur, venaient à utiliser des services payants de l'opérateur sans en avertir l'utilisateur, il y aurait possibilité de contestation de la facture.

Afin d'éviter de telles déconvenues, certaines technologies permettent, quelle que soit l'application téléchargée, de s'assurer de l'accord du client avant de confirmer l'accès à des services par une application. Par exemple, lorsqu'une application souhaite envoyer un message numérique sur un réseau GSM au moyen de messages courts (Short Message Service ou SMS), un formulaire demandant sur l'écran du terminal l'accord de l'utilisateur avant l'envoi du message peut être imposé par le terminal avant que la requête de l'application ne soit exécutée.

Selon les terminaux et les services considérés, l'accord du client peut être requis à chaque fois. L'accord peut aussi être donné par l'utilisateur à une application pour une période de temps donnée, ou bien de façon permanente, afin de ne pas lasser l'utilisateur avec des questions répétitives. A titre d'exemple, on peut citer la spécification MIDP 2.0 et en particulier son annexe « The Recommended Security Policy for GSM/UMTS Compliant Devices ».

Ce type de procédé, qui consiste en un confinement des capacités des applications, ne nécessite pas de signature numérique et de contrôle externe. Néanmoins, les deux approches (confinement d'une part, signature et contrôle externe d'autre part) peuvent être éventuellement combinées.

Toutefois, un des problèmes de l'approche consistant à tolérer les applications en confinant leurs capacités vient de la variété des offres tarifaires concernant les mêmes services proposés des opérateurs concurrents. Ainsi, par exemple, un même service utilisant de façon répétée un service d'obtention de la météo pourra être payant à l'acte pour un opérateur A, et soumis à un forfait au mois comprenant un nombre illimité de requêtes pour un autre opérateur B. Comment spécifier un terminal permettant d'accéder à l'un ou l'autre de ces deux opérateurs concurrents ? L'opérateur A, pour lequel le paiement s'effectue à l'acte, souhaitera vraisemblablement s'assurer de l'accord de l'utilisateur avant que la commande du service ne soit passée, à chaque commande, par le terminal ; un confinement de la capacité des applications d'accéder à ce service sera donc bienvenu. En revanche, l'opérateur B souhaitera vraisemblablement ne pas confiner l'accès à ce service ; en effet, un tel confinement n'aurait pas lieu d'être en raison de l'usage illimité dont jouit l'utilisateur.

Les techniques existantes ne permettent pas de spécifier un terminal prenant en compte la validité des choix des opérateurs en la matière, ce qui résulte en une politique de sécurité qui est, pour beaucoup d'opérateurs, soit trop laxiste, soit trop stricte. Idéalement, chaque opérateur de services devrait pouvoir informer l'utilisateur ou s'assurer de son accord avant d'accomplir des actions qui auront un coût pour l'utilisateur, et s'en assurer de la façon qu'il souhaite. Ainsi, on éviterait d'avoir des politiques trop laxistes, dans lesquelles l'utilisateur peut être légitimement trompé par sa facture ou, à l'inverse, trop strictes, dans lesquelles l'utilisateur doit donner explicitement son accord pour des services qui n'ont pas d'impact sur sa facture finale.

La présente invention vise à proposer un procédé de sécurisation de requêtes d'accès à des services présentant une condition d'accès particulière depuis un terminal, qui soit moins affecté par les limitations des solutions antérieures citées ci-dessus.

Ainsi, suivant un premier aspect, l'invention propose un procédé de sécurisation de requêtes d'accès à des services depuis un terminal apte à communiquer avec une pluralité d'opérateurs de services délivrant des services respectifs, comprenant les étapes suivantes :
- munir le terminal d'au moins un composant logiciel fourni par un opérateur délivrant au moins un service avec une condition d'accès particulière;
- lors d'une requête d'accès audit service depuis le terminal par l'intermédiaire d'un réseau de communications, exécuter le composant logiciel fourni par l'opérateur localement dans le terminal, l'exécution du composant logiciel comprenant au moins la présentation à un utilisateur du terminal d'une indication définie par l'opérateur dans le composant relativement à la condition d'accès particulière du service.

Un tel procédé permet ainsi de garantir que la requête d'un service et la condition particulière d'accès associée sont bien connues de l'utilisateur, sans consommer à chaque fois des ressources du réseau et en permettant un type de sécurisation adapté au choix de chaque opérateur.

L'indication présentée pourra en fonction du choix de l'opérateur, prendre la forme par exemple d'une information affichée pour l'utilisateur, relative à la condition d'accès particulière, ou encore d'une demande d'accord pour la requête du service présentant la condition particulière d'accord. L'accès au service pourra être fourni selon les cas, avant l'indication , simultanément ou après.

Un procédé selon l'invention permet en outre de décorréler les aspects relatifs aux spécifications d'une application présente dans le terminal, des aspects relatifs aux spécifications de sécurisation requise par un opérateur qui fournit un service auquel l'application fait appel.

En effet la programmation de ces différents aspects peut se faire séparément. Les mises à jour des informations que l'opérateur souhaite faire apparaître à l'utilisateur, ou un changement d'opérateurs se traduisant par le changement des spécifications de sécurisation, peuvent être réalisés en changeant le composant sans avoir à recharger l'application elle-même dans le terminal. Et réciproquement, des modifications de l'application peuvent être implémentées sans revenir sur les aspects relatifs aux choix de sécurisation des opérateurs auxquels l'application fait appel. Cette flexibilité se traduit par une rationalisation des tâches d'implémentation et une baisse des coûts qui s'y rapportent.

Suivant un deuxième aspect, l'invention propose un terminal pour sécuriser des requêtes d'accès à des services, apte à communiquer avec une pluralité d'opérateurs de services délivrant des services respectifs, comprenant des moyens incluant au moins un composant logiciel de sécurisation adapté à la mise en oeuvre des étapes d'un procédé de sécurisation selon le premier aspect de l'invention.

Suivant un troisième aspect, l'invention propose un module logiciel de sécurisation de requêtes d'accès à des services à exécuter dans un terminal apte à communiquer avec une pluralité d'opérateurs de services délivrant des services respectifs, comprenant des instructions pour mettre en oeuvre les étapes d'un procédé de sécurisation de requêtes d'accès à des services selon le premier aspect de l'invention.

Dans un mode de mise en oeuvre de l'invention, un terminal pourra ainsi lors de la commande d'un service fourni par deux opérateurs concurrents A,B par l'intermédiaire du même réseau, choisir un des deux opérateurs. Dans le cas où le terminal a été doté d'un composant, selon l'invention, relatif à l'opérateur choisi et au service retenu présentant une condition d'accès particulière, le composant s'exécutera afin de prévenir l'utilisateur du terminal de cette condition d'accès.

Dans un autre mode de réalisation de l'invention, un terminal en fonctionnement dans un réseau ne pourra communiquer qu'avec un seul opérateur de services à la fois, et ceci par exemple en fonction du réseau choisi par l'utilisateur. Par exemple, un terminal est d'abord utilisé par un utilisateur dans un réseau R1 pour un unique service de téléphonie rendu par un opérateur A, souhaitant informer systématiquement les utilisateurs des tarifs de téléphonie en cours. Lors de la première connexion au réseau, l'opérateur A télécharge le composant selon l'invention à destination du terminal. Ultérieurement, l'utilisateur pourra décider de changer d'opérateur de téléphonie et choisira l'opérateur B fournissant un service de téléphonie par exemple via un réseau R2. L'opérateur B pourra alors lui aussi munir le terminal du composant qu'il aura choisi, par exemple lors de la première connexion du terminal au réseau R2.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un terminal dans un premier mode de réalisation de l'invention;
- la figure 2 représente deux états d'un écran d'un terminal dans le mode de réalisation de la figure 1;
- la figure 3 représente un terminal dans un second mode de réalisation de l'invention.
- la figure 4 représente deux états d'un écran d'un terminal dans un troisième mode de réalisation de l'invention.

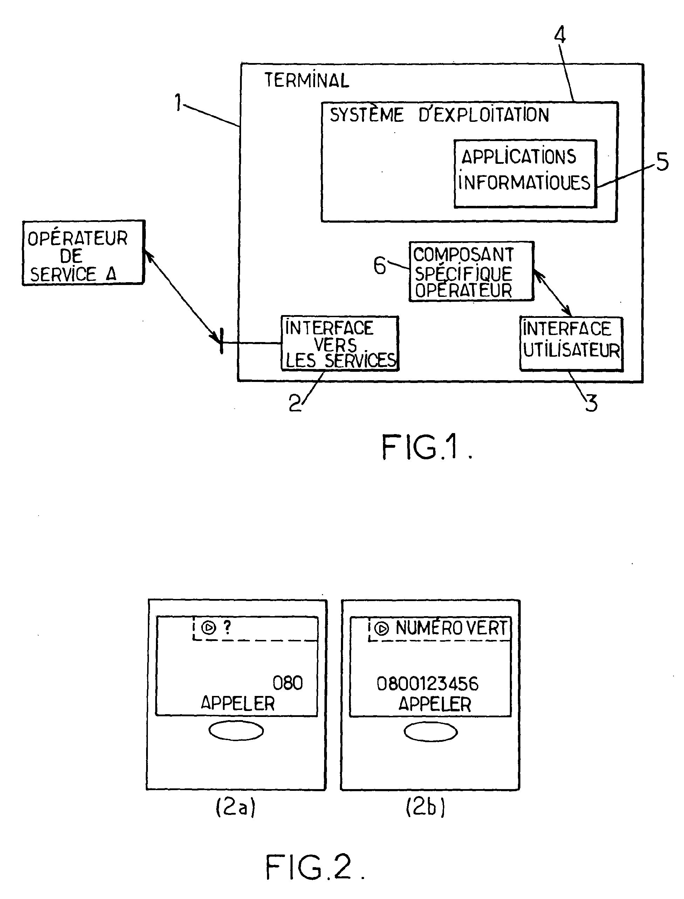

Sur la figure 1 est représenté un terminal 1 dans un premier mode de réalisation de l'invention, permettant de commander des services fournis par des opérateurs de services.

Le terminal 1 comporte une interface utilisateur 3 lui permettant de communiquer avec son utilisateur, et qui contrôle les périphériques utilisés par l'utilisateur (clavier, écran).

Le terminal 1 comporte en outre un système d'exploitation 4, ainsi que des applications informatiques 5, téléchargées ou non. L'accès aux services par ces applications et à l'interface utilisateur 3 est rendu possible par le moyen du système d'exploitation 4.

Le terminal 1 comporte en outre un composant spécifique 6 pour un opérateur A. L'interface utilisateur 3 possède une interface destinée à s'intégrer avec le composant 6.

L'opérateur de services A a préalablement fourni le code exécutable du composant 6, qui concerne les services qu'il offre et qui sont accessibles depuis le terminal 1.

Il a par exemple été délivré par l'opérateur A au terminal par un mécanisme de mise à disposition du composant à destination du terminal (méthodes de type pull), ou via un mécanisme d'envoi de ce composant vers le terminal (méthodes de type push).

Ce composant, adapté au terminal de l'utilisateur client (écrit par exemple en code mobile de type Java, en un code exécutable dédié au système d'exploitation du terminal ou encore dans un langage spécialisé) s'intègre ensuite à ce terminal en s'interfaçant à l'interface utilisateur 3 au moyen de l'interface prévue à cet effet. C'est par ce moyen que le composant d'indication va interagir avec l'utilisateur, permettant une communication bidirectionnelle.

La communication bidirectionnelle dans ce premier mode de réalisation est la suivante :
- l'utilisateur communique au terminal 1, par l'intermédiaire de l'interface utilisateur 3, des informations relatives à un service qu'il veut utiliser. Par exemple, dans le cas d'un service de type téléphonie par l'opérateur A, il compose le numéro demandé;
- le terminal transmet ensuite à l'utilisateur une information relative au service demandé, par exemple le tarif correspondant au numéro appelé. Le composant 6 a parmi ses fonctions établies préalablement par l'opérateur A, celle de fournir cette information lorsque le service choisi par l'utilisateur et fourni par l'opérateur A est commandé.

Un tel composant 6 sera appelé composant d'indication, car il fournit simplement une indication sur les conditions particulières du service choisi par l'utilisateur et fourni par l'opérateur A.

On considère ci-dessous un service de téléphonie fourni par l'opérateur A, et un terminal 1 dont le composant d'indication 6 est écrit au moyen du langage de programmation Java. Le composant d'indication est intégré à l'interface utilisateur de numérotation téléphonique. Chaque fois que l'utilisateur saisit un chiffre du numéro, ou en efface un, le numéro en cours de saisie est envoyé au composant d'indication 6 par la méthode getlndication(). Ce composant 6 répond par une chaîne de caractères qui représente l'indication correspondante. Le terminal affiche alors cette chaîne de caractères dans un emplacement réservé à cet effet sur l'écran.

L'interface du composant d'indication est par exemple la suivante :

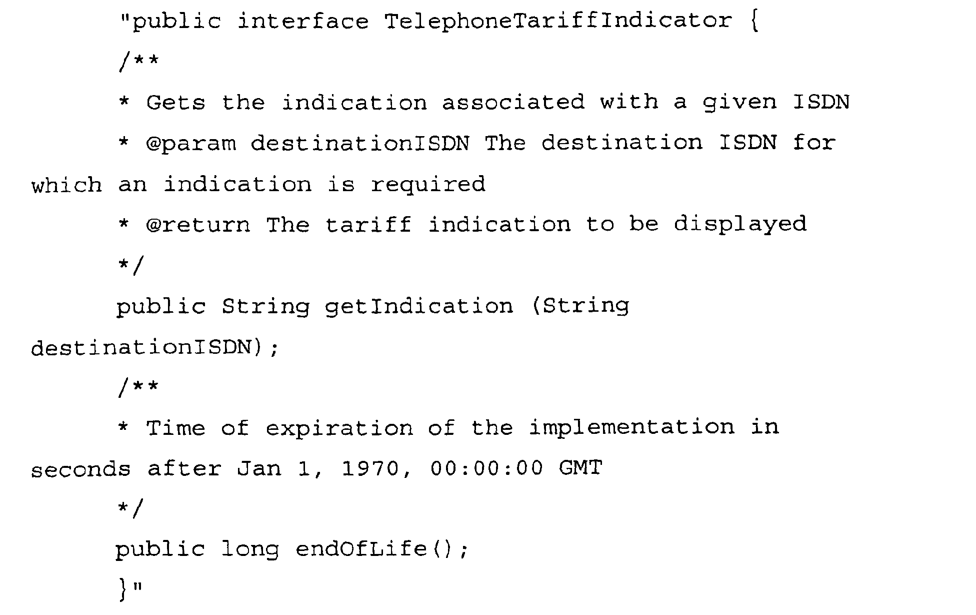

L'implémentation ci-dessous est un exemple d'implémentation du composant d'indication 6 se conformant à l'interface ci-dessus. Il examine le préfixe du numéro et renvoie une chaîne de caractères indiquant le palier de connexion. S'il ne reconnaît pas le préfixe, il se déclare incompétent en renvoyant "null.".

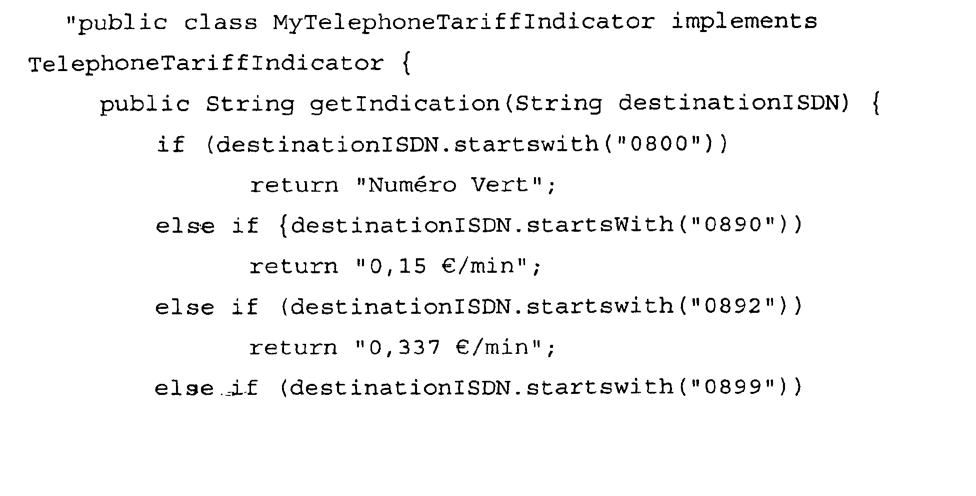

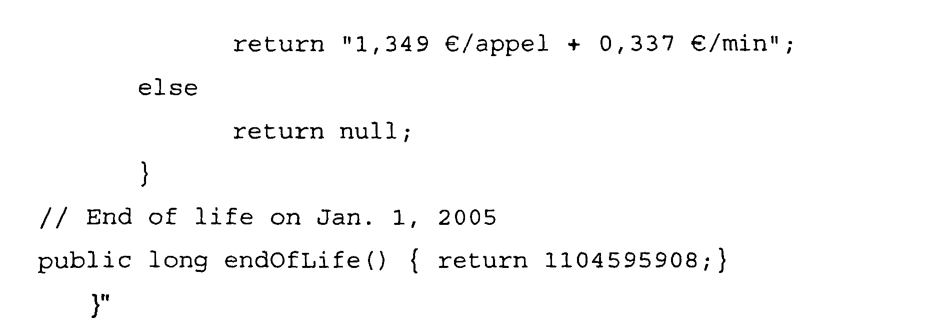

La figure 2 représente en 2a l'écran d'un terminal 1 muni du composant 6 spécifique à l'opérateur A défini ci-dessous pendant la numérotation du numéro d'appel téléphonique 0800123456, et en 2b l'écran une fois la numérotation terminée, lorsque le composant 6 a identifié le type de numéro et la tarification correspondante ("numéro vert").

Dans un second mode de réalisation, un terminal selon l'invention similaire à celui représenté en figure 1, comporte un composant 7 spécifique à un opérateur B, qui va provoquer cette fois un événement permettant de s'assurer de l'accord de l'utilisateur. Un tel composant est appelé "composant de recueil d'accord".

Il s'agit d'une variante, dans laquelle le composant 7 est chargé de recueillir l'accord de l'utilisateur afin d'accéder au service. Il est interrogé par le terminal lorsqu'une application 5 souhaite accéder à un service fourni par un opérateur B. Ce composant est chargé d'assurer l'accord de l'utilisateur pour la consommation du service, puis éventuellement de l'informer ensuite de la consommation.

Ainsi, l'invention permet à des opérateurs concurrents, ayant des politiques d'information de l'utilisateur différentes, d'offrir leurs services à des applications sur le même terminal.

Par exemple, un service de type GPRS (réseau IP mobile), est offert par un opérateur A sur la base d'une tarification forfaitaire (un montant fixe par mois), par deux autres opérateurs B et C sur la base d'une tarification à la durée (un certain montant à la minute). L'opérateur A pourra offrir ce service à des applications sur le terminal avec un composant de recueil d'accord trivial (qui ne demande rien à l'utilisateur), puisque quelle que soit la consommation faite par l'utilisateur, celui-ci paiera la même chose. L'opérateur B pourra, de son côté, offrir ce service à des applications sur le terminal via un composant de recueil d'accord qui demandera l'accord à l'utilisateur auparavant, et qui maintiendra sur l'écran une indication pendant la durée de la connexion. L'opérateur C pourra offrir le service via un composant d'indication qui affichera avant l'accès au service le tarif correspondant.

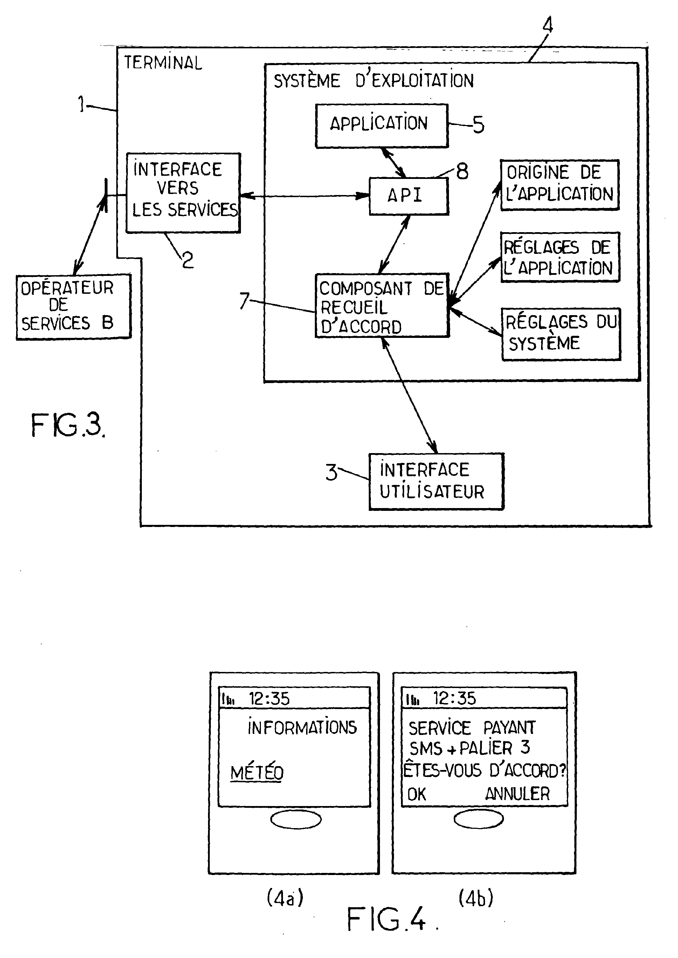

La figure 3 représente un terminal 1 comportant un composant de recueil d'accord 7 dans le deuxième mode de réalisation de l'invention.

Pour accéder aux services d'un opérateur B, une application 5 passe par une API 8 (Application Programming Interface) fournie par le système d'exploitation 4. L'API contacte le composant de recueil d'accord 7 via une interface du composant de recueil d'accord, l'implémentation du composant ayant été fournie par l'opérateur de services. En fonction de la réponse du composant de recueil d'accord 7 (accord donné ou non par l'utilisateur), l'API déclenche la commande du service et permet à l'application appelante d'y accéder, selon une première architecture (figure 3a).

Selon une autre architecture, c'est le composant de recueil d'accord 7 lui-même qui a la possibilité de commander le service demandé par l'application 6 et qui en fait bénéficier l'application, en cas d'accord de l'utilisateur.

Le recueil d'accord de la part du composant 7 peut prendre des formes variées. Il peut s'agir, par exemple, de :
- la réponse à une question posée à l'utilisateur au moyen de l'interface utilisateur 3 (par exemple : « Acceptez-vous que cette application accède au service X, facturé 0,10 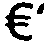 ? Oui / Non »), l'utilisateur fournissant la réponse par l'intermédiaire de l'interface utilisateur 3;
- la réponse à une question similaire, portant sur plusieurs demandes, posée précédemment à l'utilisateur (par exemple : « Acceptez-vous que cette application accède au service facturé 0,10 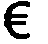 ? Oui / Oui, toujours / Non / Non, jamais »);
- l'origine de l'application demandeuse, déterminée par une signature numérique de l'application (certificat de signature de l'application, ou chaîne de certification de ce certificat);
- des réglages de l'application 5 (par exemple dans une page de réglages de l'application, la possibilité de changer un réglage : « Autoriser à accéder au service X ? Toujours, sans me demander / Me demander à chaque fois / Jamais »), réglages qui peuvent être positionnés par l'utilisateur ou par un autre « gestionnaire» (par exemple le département informatique d'une entreprise pour des services payés par l'entreprise, ou encore l'opérateur de services lui-même B);
- les réglages du système d'exploitation 4 (par exemple, réglages par défaut pour toutes les applications signées par un même certificat), réglages qui peuvent être positionnés par l'utilisateur ou par un autre "gestionnaire".

Cela nécessite que le composant de recueil d'accord 7 puisse, selon les cas, interagir avec l'utilisateur (pour poser des questions et recevoir les réponses) et/ou le système d'exploitation 4 (pour connaître l'origine de l'application demandeuse, les réglages de l'application ou les réglages du système).

Un exemple d'implémentation sera fourni plus loin dans la description, mettant en oeuvre en outre des principes de compétence introduits également ultérieurement.

Dans un troisième mode de réalisation, on conserve le principe que l'opérateur fournit au terminal un code conforme à une interface du terminal. Dans ce cas, cette interface est celle des composants d'interface utilisateur. Le composant est appelé composant d'interface utilisateur pour l'accès au service.

Un composant d'interface utilisateur est un composant logiciel qu'une application 5 peut placer sur l'écran afin d'interagir avec l'utilisateur, par exemple au moyen d'une interface graphique. Des exemples de composants d'interface utilisateur sont les boutons, les champs de saisie, les images, les textes, etc. Des bibliothèques de composants d'interface utilisateur existent en grand nombre. Quelques exemples sont : AWT, SWING ou LCDUI pour la technologie Java; Mosaic ou GTK sur systèmes X11.

Dans ce mode de réalisation, l'application peut accéder à un nouveau type de composants d'interface utilisateur, qui sont pour l'application 5 le seul moyen d'accéder au service.

L'application 5 peut les placer à l'écran, mais n 'a aucune influence sur la façon dont ils interagissent avec l'utilisateur. L'utilisateur peut interagir avec ce composant pour accéder au service (par exemple, dans le cas d'une interface graphique, en cliquant sur le composant), sans interagir directement avec l'application 5. Cela permet à l'opérateur d'être sûr que l'utilisateur est conscient de la demande qu'il fait, selon les critères définis par l'implémentation du composant d'interface utilisateur pour l'accès au service.

Par exemple, dans le cas d'une interface utilisateur constituée d'un affichage graphique et d'une souris, le composant d'interface utilisateur pour l'accès au service peut avoir la forme d'un bouton que l'application peut placer sur l'écran. L'utilisateur peut cliquer sur ce bouton, ce qui déclenche l'accès au service. Il est bien entendu primordial que l'application 5, ni aucun autre élément sur le terminal, ne puisse interférer dans l'interaction entre l'utilisateur et le composant d'interface utilisateur pour l'accès au service. Cela signifie que l'affichage du composant d'interface utilisateur pour l'accès au service ne doit pas pouvoir être modifié, et que les clics de l'utilisateur ne peuvent être simulés, ni par l'application 5, ni par aucun autre élément sur le terminal.

Plusieurs architectures pour le composant d'interface utilisateur pour l'accès au service sont réalisables. Une première architecture permet à l'opérateur de spécifier un composant d'interface utilisateur à part entière. D'autres architectures reposent sur l'utilisation d'un composant d'interface utilisateur présent à l'avance sur le terminal, l'opérateur se contentant de fournir un composant d'indication selon le premier mode de réalisation de l'invention et/ou un composant de recueil d'accord selon le second mode de réalisation.

Ces architectures faisant intervenir des composants d'indication ou de recueil d'accord montrent une application de ce qui est décrit ci-dessus. Cette application peut apporter un service équivalent à celui du composant d'interface utilisateur à part entière.

Dans la première architecture, le composant fourni par l'opérateur est l'implémentation complète d'un composant d'interface utilisateur ou composant d'interface utilisateur à part entière.

De même que dans le cas du composant de recueil d'accord de l'utilisateur, le composant d'interface utilisateur peut baser son fonctionnement sur l'origine de l'application, sur les paramètres de cette application ou sur des paramètres du système.

Le composant d'interface utilisateur pour l'accès au service est directement accessible par l'application 5. Celle-ci peut l'instancier, l'ajouter à l'interface utilisateur, etc. L'application 5 envoie à ce composant tous les paramètres pour l'accès au service. C'est le composant d'interface utilisateur qui y accède ensuite de façon autonome.

Ce composant d'interface utilisateur est chargé par l'opérateur de services, le cas échéant, d'informer l'utilisateur et de recueillir son accord pour la commande d'un service.

Dans une autre architecture, un composant d'interface utilisateur pour accéder au service est fourni par le terminal. Ce composant s'interface avec un composant d'indication fourni par l'opérateur. Le composant d'interface utilisateur intègre la gestion de l'interaction avec l'utilisateur, tandis que le composant d'indication, fourni par l'opérateur, se concentre sur ce qui est spécifique à l'opérateur en question.

Dans l'exemple ci-dessous, un composant d'interface utilisateur à part entière est fourni aux applications pour leur permettre d'envoyer des SMS+.

L'interface du composant d'interface utilisateur est par exemple aussi définie :

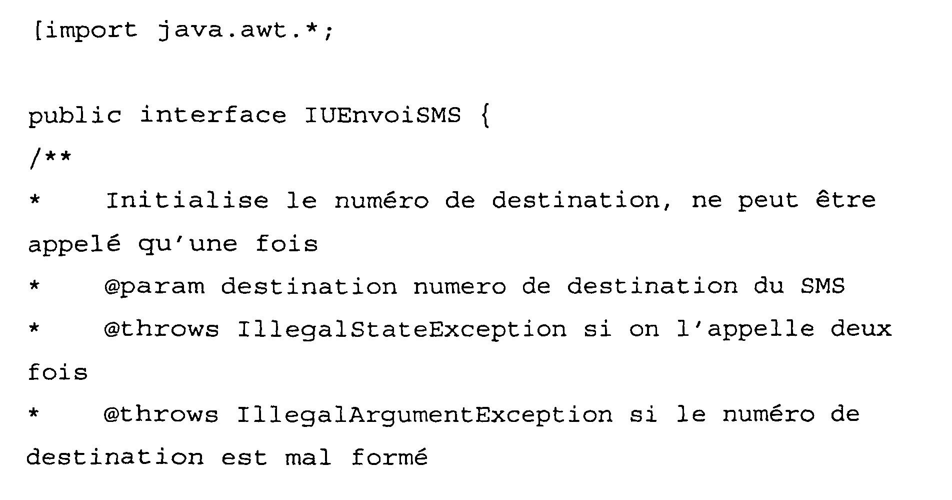

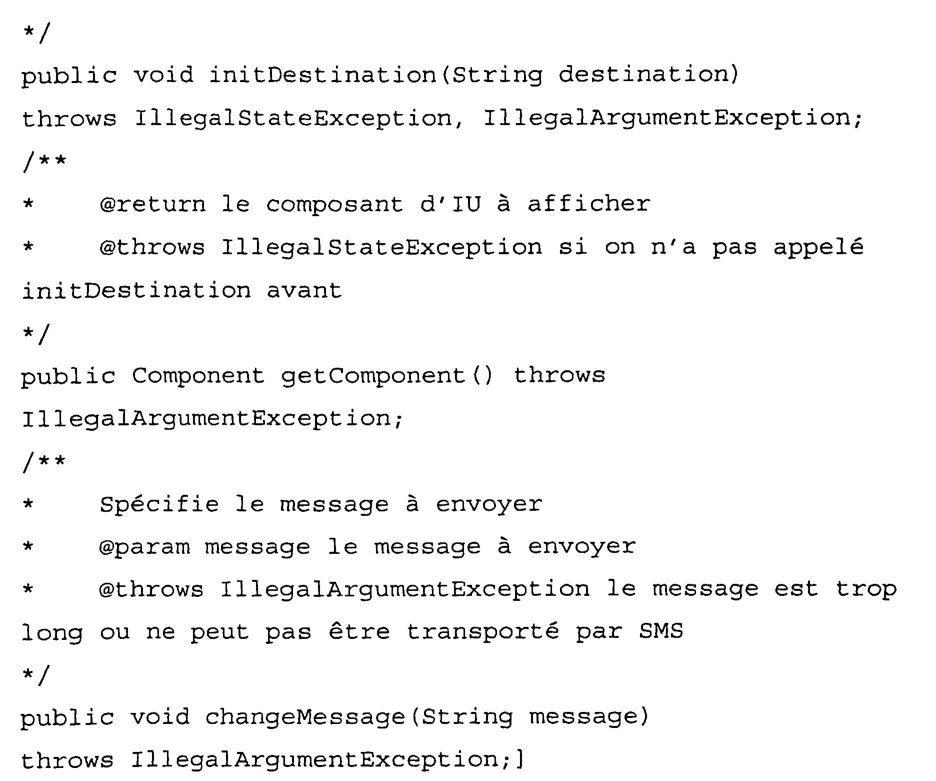

Une implémentation possible du composant d'interface utilisateur est d'afficher un bouton dont le texte et la couleur diffèrent selon le palier du SMS.

Les paragraphes ci-dessus décrivent différentes variantes de modes de réalisation de l'invention, se traduisant notamment par différents types de composants.

D'autres aspects de l'invention vont à présent être décrits.

Le code d'un composant spécifique d'indication, de recueil d'accord ou encore d'interface utilisateur, peut être délivré au terminal de l'utilisateur par différents moyens. Par exemple, il peut être écrit dans le terminal avant la vente ("en usine"), ou encore délivrée par téléchargement. Ce téléchargement peut s'effectuer depuis un réseau particulier ou de façon sécurisé par signature numérique ou encore par un câble spécifique.

Lors de la délivrance par téléchargement du composant d'indication, l'initiative de la délivrance du composant d'indication peut revenir soit au terminal, soit à l'opérateur de services, soit aux deux.

Par ailleurs, le lien unissant un opérateur de services et un composant spécifique adéquat peut n'être qu'un lien d'habilitation et non forcément de délivrance. Autrement dit, un opérateur de services peut se contenter de signifier au terminal l'habilitation de l'implémentation d'un composant, sans forcément intervenir dans sa délivrance.

Par exemple, on peut imaginer le mécanisme suivant : le terminal envoie à un opérateur un condensé du code du composant spécifique opérateur actuellement dans le terminal, par exemple un condensé obtenu par l'algorithme de hachage SHA-1 ("Secure Hash Algorithm"). L'opérateur indique en réponse si ce composant est habilité par lui pour remplir les fonctions d'indication et/ou de recueil d'accord et/ou d'interface utilisateur à part entière pour ses propres services.

L'opérateur peut éventuellement, en supplément d'une réponse négative, donner accès au composant, par exemple en envoyant une URL Internet accompagnée d'un condensé SHA-1. Le terminal se connecte alors sur Internet pour retirer le composant spécifique opérateur de l'URL indiquée, et vérifier son code par rapport au condensé SHA-1 fourni par l'opérateur.

Un composant d'indication, ou un composant de recueil de l'accord de l'utilisateur, peut utiliser différents codes de communication afin d'informer l'utilisateur du type de tarification applicable pour le service concerné. Il peut s'agir par exemple de l'affichage d'un prix, d'un nom de palier tarifaire, ou encore de codes de couleur relatifs à la tarification, d'une indication sonore, de vibrations, d'un code olfactif.

Le composant spécifique à l'opérateur peut également prendre en compte plusieurs signaux émanant de l'utilisateur, par exemple l'appui sur des touches de clavier, le contact avec des surfaces tactiles, des commandes vocales.

Un composant spécifique à l'opérateur peut interagir avec le système d'exploitation 4 du terminal de diverses façons, comme tout logiciel. Par exemple, il peut lire des paramètres, en particulier, dans le cas des télécommunications mobiles, l'état de roaming du terminal (car les tarifs peuvent être différents en cas de roaming). Il peut interagir en écrivant des paramètres : par exemple, le composant peut utiliser la mémoire du terminal pour se souvenir de la réponse de l'utilisateur à une certaine question. Il peut avoir accès à des périphériques, ou encore entrer en contact avec l'opérateur de services.

Un composant spécifique opérateur peut être plus ou moins compétent pour informer l'utilisateur, ou recueillir son accord, selon le service que l'on considère. Cela permet de gérer par exemple des cas où le composant n'est compétent que pour une partie des services pour un opérateur donné.

Plusieurs composants pour un même opérateur peuvent alors être fédérés, un composant étant sélectionné en fonction de sa compétence à traiter du service concerné, et de sa priorité (utilisée en cas de compétence multiple pour déterminer quel composant doit être sélectionné).

Un composant par défaut peut également être précisé.

L'attribution de compétences est bien entendu importante pour la sécurité. A titre d'exemple, la compétence peut être attribuée directement par le terminal, en fonction du service considéré et du composant spécifique opérateur. Par exemple, dans l'accès à des services HTTP, un composant peut être considéré comme compétent pour recueillir l'accord de l'utilisateur par le terminal avant l'accès à une URL u si et seulement si le composant a été téléchargé depuis une URL dont le répertoire est parent de u.

La compétence peut également être attribuée par une entité reconnue par le terminal pour les services considérés.

Un composant peut également se déclarer incompétent pour un service donné (indépendamment de savoir si le terminal le considère comme compétent), ce qui n'a pas d'implication sécuritaire.

Dans l'exemple considéré ci-dessous qui illustre à la fois une implémentation d'un composant de type recueil d'accord introduit plus tôt dans la description, et un exemple de déclaration de compétence ou non, le service considéré est l'envoi de SMS+ (en France, SMS à 6 chiffres facturés par paliers indexés sur le premier numéro). Les applications peuvent accéder à ce service au moyen d'une API, dont l'implémentation fait ensuite appel au composant de recueil d'accord écrit en JAVA via sa méthode askPermission(). Le composant de recueil d'accord base sa décision sur la signature de l'application demandeuse, en faisant confiance à des applications signées par un certain certificat. Si c'est insuffisant, il demande l'accord explicite de l'utilisateur. Il comporte le code lui permettant d'afficher à l'écran une question à l'utilisateur, au moyen de l'interface LCDUI définie dans Java MIDP 2.0.

L'interface du composant de recueil d'accord est la suivante :

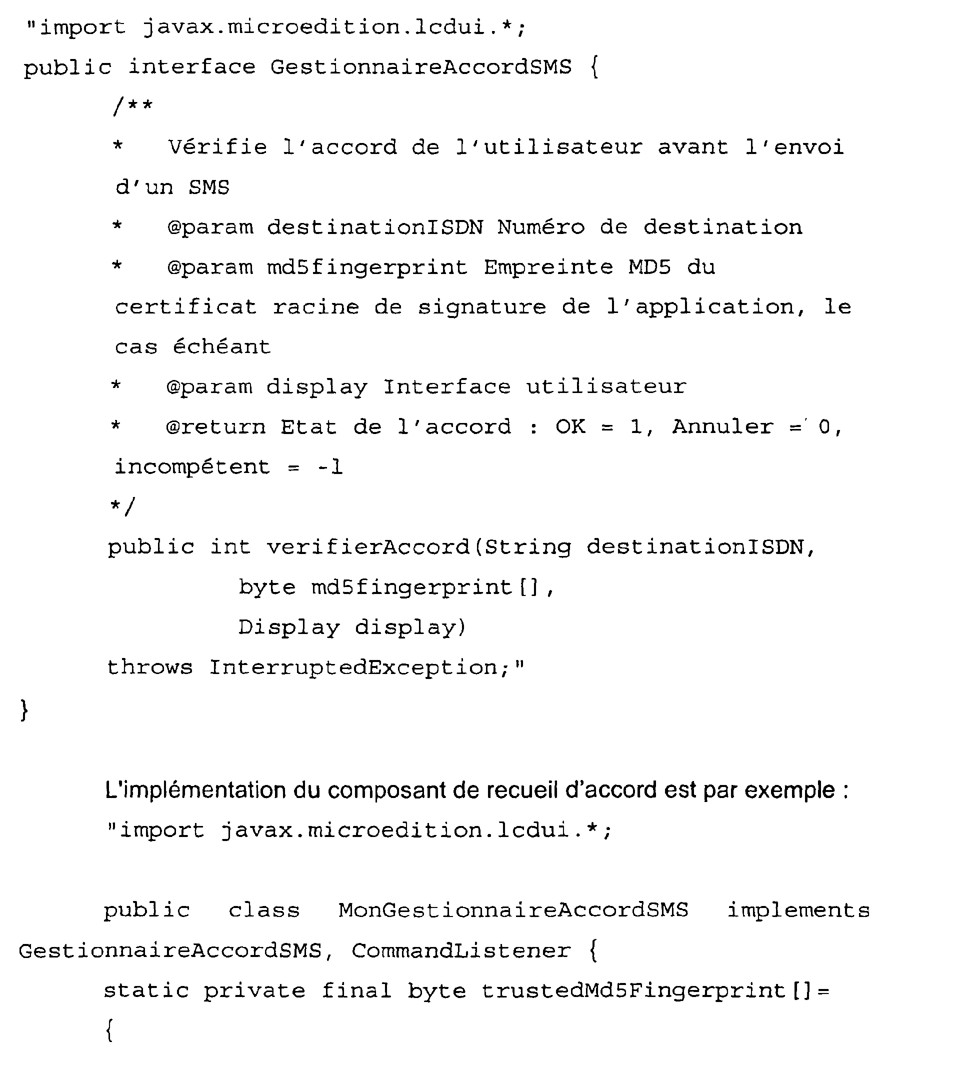

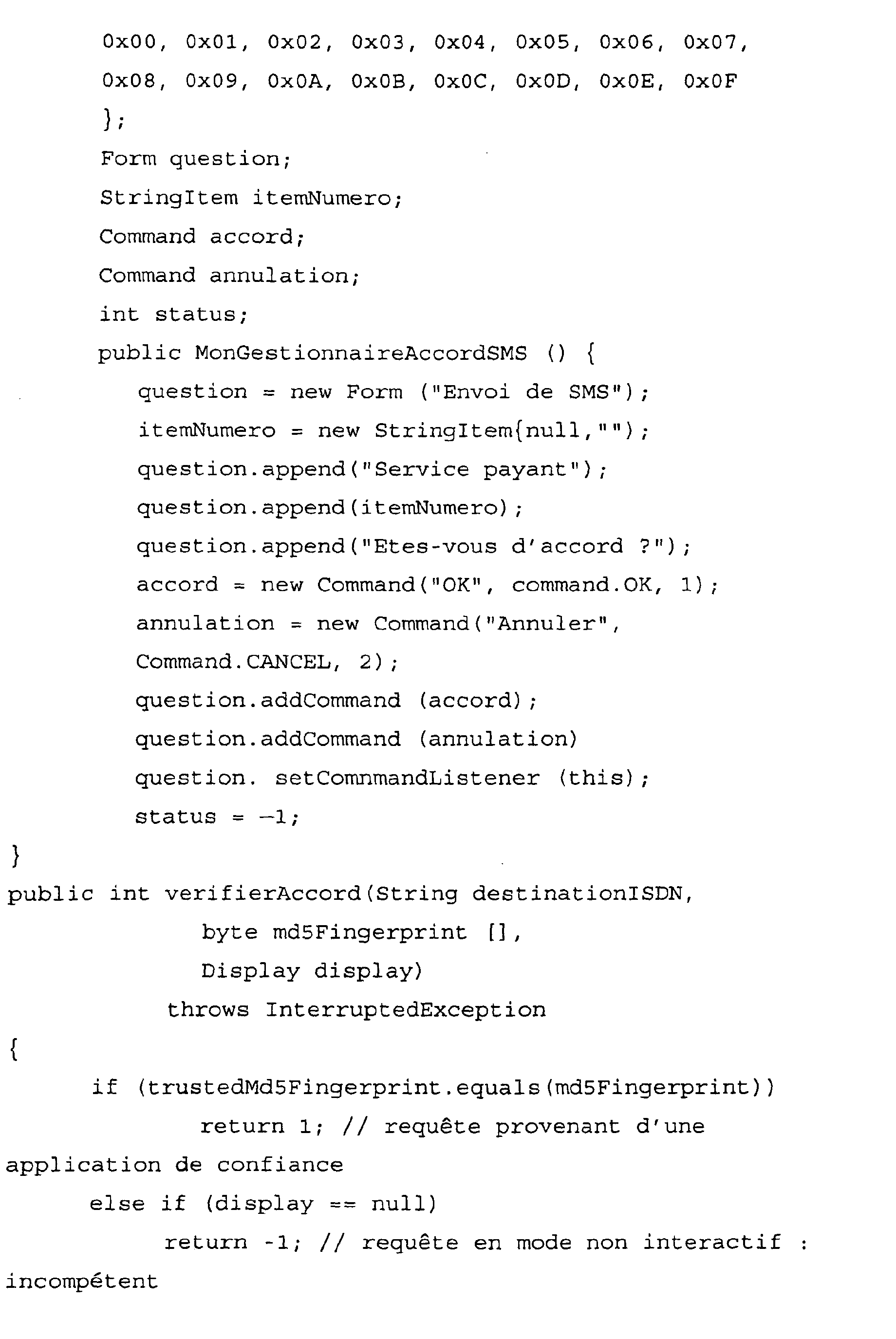

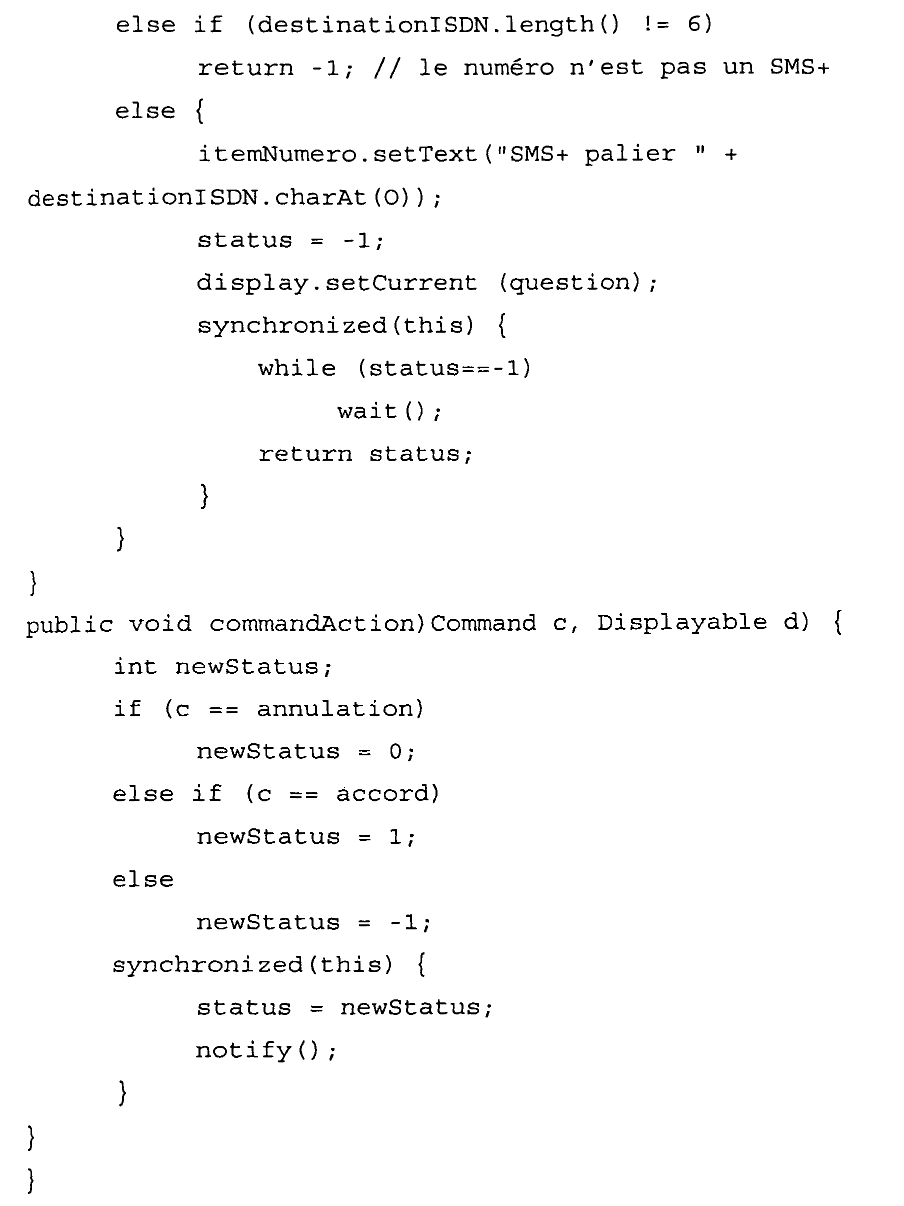

Ainsi, l'utilisateur sélectionne l'un des services proposés par une application, appellant une API qui déclenche l'envoi d'un SMS vers le numéro «398765 », qui est donc un SMS+ au palier de facturation 3. Un composant de recueil d'accord est invoqué par le terminal. Il reconnaît que le numéro est un SMS+, et tente donc de recueillir la réponse de l'utilisateur. La réponse peut être de quatre types
- 1 : l'utilisateur est d'accord. Le terminal doit envoyer le SMS.
- 0 : l'utilisateur n'est pas d'accord. Le terminal ne doit pas envoyer le SMS.
- -1 : le composant de recueil d'accord est incompétent. Le terminal doit utiliser un autre composant de recueil d'accord (par exemple, un composant par défaut qui présente le numéro de destination du SMS à l'utilisateur).
- InterruptedException: l'application a été interrompue durant la question à l'utilisateur. Le terminal doit gérer cette exception.

La figure 4 représente en 4a et en 4b un exemple correspondant à deux états successifs d'un écran d'un terminal, comprenant un composant de recueil d'accord, correspondant à l'interface de composant et à l'implémentation décrites ci-dessus.

L'écran représenté en 4a propose l'application 'Infos Trafic" et "Météo" à l'utilisateur, qui sélectionne l'application "Infos Trafic". Cette application comprend l'envoi d'un SMS. Avant cet envoi, l'exécution d'un composant de recueil d'accord associé fait s'afficher une demande d'accord représentée en 4b sur l'écran du terminal.

Le composant spécifique opérateur peut également être intégré dans un journal des consommations des services, lorsque le terminal en possède un. Ainsi, par exemple, les services consommés par le passé depuis le terminal peuvent être résumés avec des indications tarifaires ; l'utilisateur peut commander de nouveau un service commandé par le passé, auquel cas le composant de recueil d'accord peut intervenir.

Ainsi l'invention permet de prendre en compte les souhaits variés des opérateurs en matière de sécurisation de service, tout en rationalisant l'implémentation dans le terminal des applications faisant appels à des services présentant des conditions d'accès particulières et des spécifications de sécurisation définies par chaque opérateur.

## Revendications

1. Procédé de sécurisation de requêtes d'accès à des services depuis un terminal (1) apte à communiquer avec une pluralité d'opérateurs de services (A;B) délivrant des services respectifs, comprenant les étapes suivantes :
- munir le terminal d'au moins un composant logiciel (6;7) fourni par un opérateur délivrant au moins un service avec une condition d'accès particulière,
- lors d'une requête d'accès audit service depuis le terminal par l'intermédiaire d'un réseau de communications, exécuter le composant logiciel fourni par l'opérateur localement dans le terminal, l'exécution du composant logiciel comprenant au moins la présentation à un utilisateur du terminal d'une indication définie par l'opérateur dans le composant relativement à la condition d'accès particulière du service.

2. Procédé selon la revendication 1 selon lequel une partie au moins de la condition d'accès particulière du service est que ledit service soit payant et l'indication fournie à l'utilisateur est relative au tarif du service.

3. Procédé selon l'une quelconque des revendications précédentes, selon lequel une partie au moins de la condition d'accès particulière du service est que ledit service comporte un traitement de données personnelles, et l'indication fournie à l'utilisateur est relative à l'accès par des tiers à ces données personnelles.

4. Procédé selon l'une quelconque des revendications précédentes, selon lequel l'accès au service n'est pas autorisé par le terminal (1) avant que l'indication n'ait été présentée.

5. Procédé selon l'une quelconque des revendications 1 à 4 selon lequel l'indication comprend une demande d'accord effectuée localement au terminal (1) pour la commande du service, et l'accès au service est rendu impossible par le terminal au cas où l'accord n'est pas obtenu.

6. Procédé selon la revendication 5 selon lequel la demande d'accord est posée à l'utilisateur par l'intermédiaire d'une interface utilisateur (3) dont le terminal est doté, la réponse à la demande d'accord étant fournie par l'utilisateur.

7. Procédé selon la revendication 5 selon lequel la réponse à la demande d'accord est fournie par des données stockées dans le terminal.

8. Terminal (1) pour sécuriser des requêtes d'accès à des services, apte à communiquer avec une pluralité d'opérateurs de services délivrant des services respectifs, comprenant des moyens incluant au moins un composant logiciel de sécurisation adapté à la mise en oeuvre des étapes d'un procédé de sécurisation selon l'une quelconque des revendications précédentes.

9. Terminal selon la revendication 8, dans lequel au moins un composant logiciel de sécurisation a été intégré dans le terminal en usine.

10. Terminal selon la revendication 8 ou la revendication 9, dans lequel au moins un composant logiciel de sécurisation a été chargé ou mis à jour dans le terminal par téléchargement.

11. Module logiciel de sécurisation de requêtes d'accès à des services, à exécuter dans un terminal (1) apte à communiquer avec une pluralité d'opérateurs de services délivrant des services respectifs, comprenant des instructions pour mettre en oeuvre les étapes d'un procédé de sécurisation de requêtes d'accès à des services selon l'une quelconque des revendications 1 à 7.
